# EUROPEAN PATENT APPLICATION

(11) **EP 3 531 003 A1**
(43) Date of publication of application: **28.08.2019**
(21) Application number: 19157375.7
(22) Date of filing: 15.02.2019
(51) Int. Cl.: F16L 59/02, F16L 59/15, E03F 3/04, E02D 31/02

(54) **PIPE INSULATION**

(30) Priority: 15.02.2018 FI 20185132
(71) Applicant: Pisaron OY, 86600 Haapavesi (FI)
(72) Inventor: JOKITALO, Ari-Pekka, 86600 Haapavesi (FI)
(74) Representative: Berggren Oy, Helsinki & Oulu

(57) **Abstract**

A pipe insulation has a first flat surface (10), which has a first trough-shaped cavity (22). The pipe insulation is formed from a water permeable insulation material which does not become waterlogged. Due to the fact that it does not become waterlogged, the pipe insulation retains its heat insulation properties when sunk into the soil. Due to its water permeability, the pipe insulation sunk into the soil can function as a draining layer. The insulation material comprises insulation material grains, which are connected together with a water impermeable adhesive binder. The adhesive binder can form a substantially waterproof film around the insulation grain, which prevents water from being absorbed into the insulation grain. The insulation material grains can be EPS (Expanded polystyrene) grains.

## Description

The invention relates to a pipe insulation, which is formed from a water permeable insulation material which does not become waterlogged, and which pipe insulation has a first flat surface, which first flat surface has a first trough-shaped cavity.

In house construction sites and municipal engineering, water pipes, sewer pipes and heating pipes are placed in the soil, which pipes must be insulated either to prevent freezing of the pipes or to minimize heat losses. Insulations sunk into the soil are subjected to moistness of the soil and the weight of the soil masses, which sets requirements for the insulation material. Installing insulations around pipes in a narrow trench dug into the soil is difficult. Due to the afore-mentioned reasons, heat insulation of pipes to be installed into the soil is slow and expensive.

Building footings and foundation walls of basements must be equipped with draining, so that the soil moisture cannot pass into the structures through the foundations. The draining pipes are placed below the level of the bottom surface of the sole of the building and are surrounded on all sides with a highly water permeable, coarse soil material, typically draining gravel or macadam. In buildings with a basement, a draining gravel or macadam layer is made also against the wall surface extending underneath the ground surface. Soil material must be brought to the construction site in order to build the draining, which is not needed in any other soil construction procedure, which raises the construction costs of the draining. Handling heavy soil material is hard, wherefore expensive earthmovers must be used at the construction site.

Draining pipes are previously known, on the outer surface of which a water permeable layer has already been formed, which layer replaces a separate layer formed from draining gravel or macadam. Such pipes are expensive and making joints in the pipes is difficult. Publication FI 51396 shows a trough-shaped insulation piece, which is meant for heat insulation of pipelines to be sunk into the ground. The insulation piece is manufactured from a water permeable, heat-insulating fibrous material, such as rock wool.

An object of the invention is to provide a pipe insulation, which reduces the problems relating to the prior art. The objects of the invention are obtained with a pipe insulation, which is characterized by what is presented in the independent claim. Some advantageous embodiments of the invention are presented in the dependent claims.

The invention relates to a pipe insulation, which has a first flat surface, which first flat surface has a first trough-shaped cavity. The pipe insulation is formed from a water permeable insulation material which does not become waterlogged. The expression that the insulation does not become waterlogged means that water is not absorbed into the pipe insulation in a harmful amount, when it is installed in the soil, where it is subjected to moistness of the soil, ground water and melt water absorbed into the soil. Due to the fact that it does not become waterlogged, the pipe insulation retains its heat insulation properties when sunk into the soil. Due to its water permeability, the pipe insulation sunk into the soil can function as a draining layer. The insulation material comprises insulation material grains, which are connected together with an adhesive binder. Said adhesive binder is advantageously a substantially water impermeable substance. The adhesive binder forms a substantially waterproof film around the insulation grain, which prevents water from being absorbed into the insulation grain.

In an advantageous embodiment of the pipe insulation according to the invention, said insulation material grains are EPS (Expanded polystyrene) grains. EPS grains are very light, due to which the pipe insulation is also light and easy to handle. The insulation material grains can also be some other material, such as polyurethane or expanded clay.

In a second advantageous embodiment of the pipe insulation according to the invention, said first flat surface is substantially plane. The plane first flat surface makes it possible to place two pipe insulations on top of each other, so that their first trough-shaped cavitys settle against each other and no substantial gap remains in the joint between the pipe insulations. The cross-sectional shape of the first trough-shaped cavity is advantageously substantially a semicircle. Thus, a pipe-like hole with a circular cross-sectional shape remains between two pipe insulations placed against each other. The diameter of the trough-shaped cavity can be dimensioned so that a conventional draining pipe fits inside the hole formed between two pipe insulations without a substantial clearance. The insulation pieces thus form a draining layer around the draining pipe, which can replace a draining layer formed from draining gravel or macadam.

In still another advantageous embodiment of the pipe insulation according to the invention, the pipe insulation is shaped like a plate-like piece, which has a plane second flat surface substantially parallel with the first flat surface, a first edge surface and a second edge surface. Handling plate-like pieces at a construction site is easy and a long trough which stays in its place can easily be formed from the pipe insulations at the installation stage by setting them in a row for example on top of the levelled bottom of a pipe trench. In such a long trough it is easy to install in place a draining pipe, which is covered with a second row of pipe insulations. The distance between the first and second edge surface is advantageously substantially twice the distance between the first and second flat surface. Thus, the heat insulation made up of pipe insulations forms a symmetrical heat insulation layer around the pipe.

In still another advantageous embodiment of the pipe insulation according to the invention, said first flat surface additionally has at least one second trough-shaped cavity, so that the first and second trough-shaped cavity are substantially parallel. Thus, two pipe-like holes are formed between two pipe insulations placed against each other. The diameter of the second trough-shaped cavity can be the same size or a different size than the diameter of the first trough-shaped cavity. This embodiment of the pipe insulation is especially well suited for situations, where two parallel pipes are installed in the same trench, for example a sewer pipe and domestic water pipe of a building. Thus, both pipes can be insulated with the same pipe insulations.

Still another advantageous embodiment of the pipe insulation according to the invention is a substantially rigid piece. A rigid piece here means that it can withstand a fair amount of long-term compressive stress, for example the weight of a 3-meter-thick layer of soil, without being significantly compressed. The pipe insulation thus retains its shape and heat insulation ability in conventional use situations of insulations to be placed in the soil.

An advantage of the invention is that it makes it easier and quicker to build a draining layer around draining pipes.

An additional advantage of the invention is that it makes it easier to insulate pipes to be installed in the soil from frost.

In the following, the invention will be described in detail. In the description, reference is made to the enclosed drawings, in which
figure 1 shows as an example a pipe insulation according to the invention seen diagonally from above and
figure 2 shows as an example a pipe, which has been insulated from the outside with pipe insulations according to the invention.

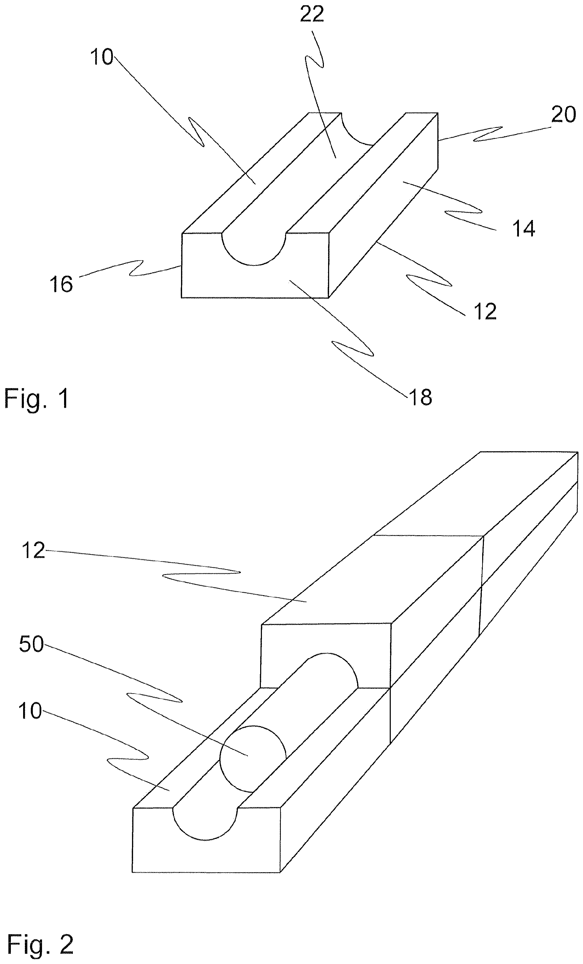

Figure 1 shows as an example a pipe insulation according to the invention seen diagonally from above. The pipe insulation is a plate-like piece, which has a first flat surface 10, a second flat surface 12 substantially parallel with the first flat surface, a first edge surface 14 and a second edge surface 16 substantially parallel with it. The distance between the first and second flat surface determines the height of the pipe insulation, and the distance between the first and second edge surface determines the width of the pipe insulation. The pipe insulation additionally has a first end surface 18 and a second end surface 20, the distance between which determines the length of the pipe insulation. The height, width and length of the pipe insulation can be selected in a desired manner during the manufacturing stage of the pipe insulation. The width of the pipe insulation can for example be 30-50 cm, the height for example 10-20 cm and the length for example 1.0-1.5 m. Advantageously, the width of the pipe insulation is twice the height of the pipe insulation.

The first flat surface 10 has a trough-shaped cavity 22, which extends from the first end surface 18 to the second end surface 20. The cross-sectional shape of the cavity is a semicircle, and it remains constant over the entire length of the cavity. The diameter of the semicircle can for example be 115 mm. With the exception of the cavity, the first flat surface is a substantially plane surface. Also, the second flat surface 12, both edge surfaces 14, 16 and both end surfaces 18, 20 are substantially plane surfaces.

The pipe insulation is manufactured from EPS (Expanded polystyrene) grains, which are bound together with a waterproof adhesive binder. The adhesive binder and polystyrene grains are mixed together into a mixture, which is cast in a casting mould shaped like the pipe insulation. As the adhesive binder hardens, the mixture forms a solid, substantially rigid pipe insulation, which can be removed from the casting mould. The adhesive binder forms a water impermeable surface layer on the surface of the EPS grains, which prevents water from being absorbed into the EPS grain. The EPS grains thus do not become waterlogged, but they retain their heat insulation ability also in wet conditions. The adhesive binder does not completely fill the space remaining between the spherical EPS grains, but hollow spaces and channels remain between the grains, which function as flow routes for water. The pipe insulation is thus a water permeable piece, which can function as a draining layer around a draining pipe.

Figure 2 shows as an example a pipe 50, which has been insulated from the outside with pipe insulations according to the invention. Insulation of a pipe takes place so that a first row of pipe insulations is formed on a levelled base, so that the first surfaces of the pipe insulations are left as the upper surfaces and first and second end surfaces of subsequent pipe insulations settle against each other. A trough the length of the entire pipe insulation row is thus formed on the upper surface of the pipe insulation row, in which trough the pipe 50 to be insulated is placed. Thereafter a second row is formed from pipe insulations on top of the first pipe insulation row, so that the first flat surfaces 10 of pipe insulations settling on top of each other settle against each other. The upper surface of the second pipe insulation row is thus formed from the second flat surfaces 12 of the pipe insulations. The pipe to be insulated thus remains in a pipe-like hole formed between two pipe insulation rows.

The pipe 50 shown in the figure can be a draining pipe, whereby a draining layer is formed from pipe insulations around the pipe, which draining layer also has a heat insulation property. The pipe can also be a sewer pipe or a water pipe, whereby the layer formed by pipe insulations surrounding the pipe is primarily a heat insulation and/or frost insulation, which is water permeable. The diameter of the cavitys 22 of the pipe insulations is dimensioned so that the diameter of the hole remaining between the pipe insulations placed against each other is slightly larger, advantageously a few millimetres larger than the diameter of the pipe 50. Thus, placing the pipe in the trough formed in the upper surface of the pipe insulations is easily managed, and the pipe insulations to be placed on top of each other press tightly against each other. Pipes to be sunk into the soil, such as draining pipes, sewer pipes and water pipes, have a very limited number of cross-sectional sizes, so suitable pieces of pipe insulations for all most commonly used pipe cross-sections can be manufactured into storage.

Some advantageous embodiments of the pipe insulation according to the invention have been described above. The invention is not limited to the solutions described above, but the inventive idea can be applied in different ways within the scope of the claims.

## Claims

1. A pipe insulation, which pipe insulation is formed from a water permeable insulation material which does not become waterlogged, and which has a first flat surface (10), which first flat surface (10) has a first trough-shaped cavity (22), **characterized in that** said insulation material comprises insulation material grains, which are connected together with an adhesive binder.

2. The pipe insulation according to claim 1, **characterized in that** said adhesive binder is a substantially water impermeable substance.

3. The pipe insulation according to claim 1 or 2, **characterized in that** said insulation material grains are EPS (Expanded polystyrene) grains.

4. The pipe insulation according to any of the claims 1-3, **characterized in that** said first flat surface (10) is substantially plane.

5. The pipe insulation according to any of the claims 1-4, **characterized in that** the cross-sectional shape of said first trough-shaped cavity (22) is substantially a semicircle.

6. The pipe insulation according to any of the claims 1-5, **characterized in that** the pipe insulation is shaped like a plate-like piece, which has a plane second flat surface (12) substantially parallel with the first flat surface (10), a first edge surface (14) and a second edge surface (16).

7. The pipe insulation according to claim 6, **characterized in that** the distance between the first edge surface (14) and the second edge surface (16) is substantially twice the distance between the first flat surface (10) and second flat surface (12).

8. The pipe insulation according to any of the claims 1-7, **characterized in that** said first flat surface (10) additionally has at least one second trough-shaped cavity, so that the first trough-shaped cavity (22) and second trough-shaped cavity are substantially parallel.

9. The pipe insulation according to any of the claims 1-8, **characterized in that** it is a substantially rigid piece.
